(19) Europäisches Patentamt
European Patent Office
Office européen des brevets

(11) Veröffentlichungsnummer : **0 008 641**
**B1**

(12) # EUROPÄISCHE PATENTSCHRIFT

(45) Veröffentlichungstag der Patentschrift : **13.01.82**

(21) Anmeldenummer : **79102435.9**

(22) Anmeldetag : **13.07.79**

(51) Int. Cl.³ : **C 07 C143/78**, C 07 F 9/38, B 01 D 53/14, C 10 G 27/04, C 10 K 1/14

(54) **Anthrachinonsulfonamide und Verfahren zu ihrer Herstellung.**

(30) Priorität : **21.07.78 GB 3084478**

(43) Veröffentlichungstag der Anmeldung : **19.03.80 (Patentblatt 80/06)**

(45) Bekanntmachung des Hinweises auf die Patenterteilung : **13.01.82 Patentblatt 82/02**

(84) Benannte Vertragsstaaten : **BE DE FR GB IT NL**

(56) Entgegenhaltungen :
**DE - A - 2 135 022**
**FR - A1 - 2 254 361**
**GB - A - 717 455**
**GB - A - 871 233**
**GB - A - 948 270**
**US - A - 2 997 439**

(73) Patentinhaber : **CIBA-GEIGY AG**
**Patentabteilung Postfach**
**CH-4002 Basel (CH)**

(72) Erfinder : **Randell, Donald Richard, Dr.**
**75, Mauldeth Road**
**Heaton Mersey Stockport, Cheshire (GB)**
Erfinder : **Phillips, Emyr, Dr.**
**12 Pinewood Court Broad Road**
**Sale, Cheshire (GB)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Imprimerie Jouve, 18, rue St-Denis, 75001 Paris, France

Anthrachinonsulfonamide und Verfahren zu ihren Herstellung

Die Erfindung betrifft neue Anthrachinonsulfonamide sowie, Verfahren zu deren Herstellung. Die Verbindungen sind geeignet zur Verwendung in einem Verfahren, wo $H_2S$ als Verunreinigung aus Gasen und flüssigen Kohlenwasserstoffen entfernt wird.

Als Stand der Technik sind die GB-PS 871 233 und die GB-PS 948 270 anzuführen, in denen ähnliche Verwendungen beschrieben worden sind. Diese bekannten Verfahren haben aber den Nachteil, dass die dabei verwendeten Anthrachinondisulfonsäuren Probleme bezüglich der Löslichkeit in den angewandten Waschlösungen aufwerfen. Dies hat eine Begrenzung der Aktivität bei der Entfernung von $H_2S$ zur Folge.

Die Verwendung von Anthrachinonsulfonsäureamid bzw. -carbonsäureamid als photographischer Desensibilisator ist aus GB-PS 465 343 bekannt.

Gegenstand der Erfindung sind die neuen Verbindungen der Formel I

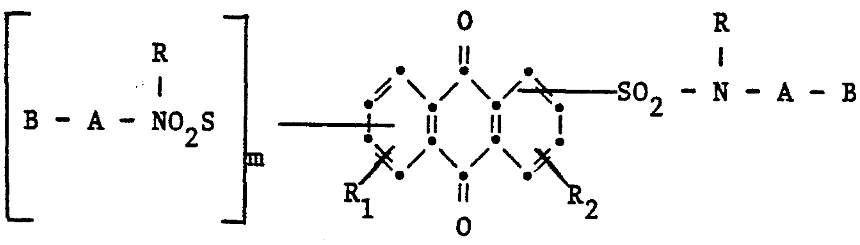

(I)

worin

A eine geradkettige oder verzweigte Alkylengruppe mit 1-4 C-Atomen ist,

B $—SO_3M$, $—CO_2M$, $—PO_3HM$ oder $—PO_3M_2$ bedeutet, wobei

M Wasserstoff oder ein wasserlöslich-machendes Kation ist,

R Wasserstoff, ein wasserlöslich-machendes Kation oder eine geradkettige oder verzweigte Alkylgruppe mit 1-4 C-Atomen bedeutet,

$R_1$ und $R_2$ gleich oder verschieden sind und für Wasserstoff, Methyl oder —COOH stehen, wobei mindestens eines von $R_1$ und $R_2$ Wasserstoff ist, und

m 0 oder 1 ist.

Bevorzugt sind solche Verbindungen der Formel I, in der B die Gruppe $—SO_3M$, $R_1$ und $R_2$ Wasserstoff, M und R Wasserstoff, Alkalimetall oder ein Ammonium-Kation, in dem die H-Atome durch $C_1$-$C_6$-Alkyl oder $C_1$-$C_6$-Hydroxyalkyl substituiert sein können, darstellen, A ein geradkettiges $C_1$-$C_4$-Alkylen bedeutet und m 1 ist.

Sind M und R wasserlöslich-machende Kationen, so sind sie bevorzugt Alkalimetalle, wie z.B. Natrium oder Kalium, substituiertes oder unsubstituiertes Ammonium, wie z.B. Ammonium oder gegebenenfalls sustituiertes Alkylammonium. Beispiele für Alkylsubstituenten für das Ammonium sind Methyl, Aethyl, Propyl, Butyl oder Hydroxyäthyl, welches Mono-, Di- oder Triäthanolamin ergibt.

Eine weitere Vorzugsform der Erfindung sind solche Verbindungen der Formel I, in der A Methylen oder Aethylen ist, m die Zahl 1 bedeutet und M und/oder R Natrium, Kalium oder Ammonium bedeuten.

Bevorzugte Verbindungen der Formel I sind folgende Stoffe.

N,N'-Bis(sulphomethyl)anthrachinon-2,6-disulphonamid,

N,N'-Bis(sulphomethyl)anthrachinon-2,7-disulphonamid, Gemische dieser beiden Verbindungen,

N,N'-Bis(sulpho-2-äthyl)anthrachinon-2,6-disulphonamid,

N,N'-Bis(sulpho-2-äthyl)anthrachinon-2,7-disulfonamid und Gemische der letzteren beiden Stoffe.

Beispiele für die Verbindungen der Formel I:

$m = 0$, $R = R_1 = R_2 = H$

N-Sulphomethylanthrachinon-2-sulphonamid
N-Sulpho-2-äthylanthrachinon-2-sulphonamid
N-Sulpho-3-propylanthrachinon-2-sulphonamid
N-Sulpho-4-butylanthrachinon-2-sulphonamid
N-Sulpho(1,1-dimethyläthyl)anthrachinon-2-sulphonamid

$m = 0$, $R = C_1$-$C_4$ Alkyl, $R_1 = R_2 = H$

N-Methyl-N-sulpho-methylanthrachinon-2-sulphonamid
N-Methyl-N-sulpho-2-äthylanthrachinon-2-sulphonamid
N-Methyl-N-sulpho-3-propylanthrachinon-2-sulphonamid
N-Methyl-N-sulpho-4-butylanthrachinon-2-sulphonamid

$m = 1$, $R = R_1 = R_2 = H$

N,N'-Bis(sulphomethyl)anthrachinon-1,5-disulphonamid
N,N'-Bis(sulphomethyl)anthrachinon-1,6-disulphonamid
N,N'-Bis(sulphomethyl)anthrachinon-1,7-disulphonamid

N,N'-Bis(sulphomethyl)anthrachinon-2,6-disulphonamid
N,N'-Bis(sulphomethyl)anthrachinon-2,7-disulphonamid
N,N'-Bis(sulpho-2-äthyl)anthrachinon-1,5-disulphonamid
N,N'-Bis(sulpho-2-äthyl)anthrachinon-1,6-disulphonamid
N,N'-Bis(sulpho-2-äthyl)anthrachinon-1,7-disulphonamid

N,N'-Bis(sulpho-2-äthyl)anthrachinon-2,6-disulphonamid
N,N'-Bis(sulpho-2-äthyl)anthrachinon-2,7-disulphonamid
N,N'-Bis(sulpho-3-propyl)anthrachinon-1,5-disulphonamid
N,N'-Bis(sulpho-3-propyl)anthrachinon-1,6-disulphonamid
N,N'-Bis(sulpho-3-propyl)anthrachinon-1,7-disulphonamid

N,N'-Bis(sulpho-3-propyl)anthrachinon-2,6-disulphonamid
N,N'-Bis(sulpho-3-propyl)anthrachinon-2,7-disulphonamid
N,N'-Bis(sulpho-4-butyl)anthrachinon-1,5-disulphonamid
N,N'-Bis(sulpho-4-butyl)anthrachinon-1,6-disulphonamid
N,N'-Bis(sulpho-4-butyl)anthrachinon-1,7-disulphonamid

N,N'-Bis(sulpho-4-butyl)anthrachinon-2,6-disulphonamid
N,N'-Bis(sulpho-4-butyl)anthrachinon-2,7-disulphonamid
N,N'-Bis(sulpho-1,1-dimethyläthyl)anthrachinon-2,6-disulphonamid
N,N'-Bis(sulpho-1,1-dimethyläthyl)anthrachinon-2,7-disulphonamid

$m = 1$, $R = C_1$-$C_4$ Alkyl, $R_1 = R_2 = H$

N,N'-Dimethyl-N,N'-bis(sulphomethyl)anthrachinon-1,5-disulphonamid
N,N'-Diäthyl-N,N'-bis(sulphomethyl)anthrachinon-1,6-disulphonamid
N,N'-Dipropyl-N,N'-bis(sulphomethyl)anthrachinon-1,7-disulphonamid

N,N'-Dimethyl-N,N'-bis(sulphomethyl)anthrachinon-2,6-disulphonamid
N,N'-Diäthyl-N,N'-bis(sulphomethyl)anthrachinon-2,7-disulphonamid

N,N'-Dimethyl-N,N'-bis(sulphoäthyl)anthrachinon-1,5-disulphonamid
N,N'-Diäthyl-N,N'-bis(sulpho-2-äthyl)anthrachinon-1,6-disulphonamid
N,N'-Dipropyl-N,N'-bis(sulpho-2-äthyl)anthrachinon-1,7-disulphonamid

N,N'-Dimethyl-N,N'-bis(sulpho-2-äthyl)anthrachinon-2,6-disulphonamid
N,N'-Diäthyl-N,N'-bis(sulpho-2-äthyl)anthrachinon-2,7-disulphonamid

N,N'-Dimethyl-N,N'-bis(sulpho-3-propyl)anthrachinon-1,5-disulphonamid
N,N'-Diäthyl-N,N'-bis(sulpho-3-propyl)anthrachinon-1,6-disulphonamid
N,N'-Dipropyl-N,N'-bis(sulpho-3-propyl)anthrachinon-1,7-disulphonamid

N,N'-Dimethyl-N,N'-bis(sulpho-3-propyl)anthrachinon-2,6-disulphonamid
N,N'-Diäthyl-N,N'-bis(sulpho-3-propyl)anthrachinon-2,7-disulphonamid

N,N'-Dimethyl-N,N'-bis(sulpho-4-butyl)anthrachinon-1,5-disulphonamid
N,N'-Diäthyl-N,N'-bis(sulpho-4-butyl)anthrachinon-1,6-disulphonamid
N,N'-Dipropyl-N,N'-bis(sulpho-4-butyl)anthrachinon-1,7-disulphonamid

N,N'-Dimethyl-N,N'-bis(sulpho-4-butyl)anthrachinon-2,6-disulphonamid
N,N'-Diäthyl-N,N'-bis(sulpho-4-butyl)anthrachinon-2,7-disulphonamid,

sowie Verbindungen worin B —COOH oder —$PO_3H_2$ ist anstelle von —$SO_3H$, oder Natrium-, Kalium- oder Ammoniumsalze der zuvor genannten Verbindungen oder Gemische der genannten Verbindungen.

Die Verbindungen der Formel I, worin R Wasserstoff ist oder geradkettiges oder verzweigtes $C_1$-$C_4$ Alkyl, können durch die Umsetzung der entsprechenden Anthrachinonsulfonylhalogenide der Formel II

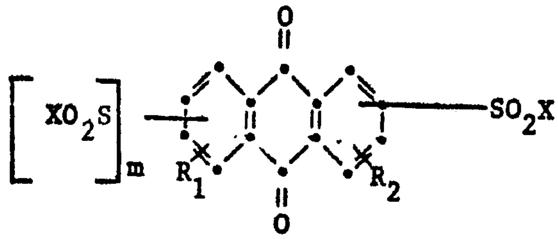

(II)

mit einer Verbindung der Formel III

R — NH — A — B (III)

worin X Halogen, insbesondere Chlor, und R Wasserstoff oder gerad- Kettiges oder verzweigtes $C_1$-$C_4$-Alkyl ist; und A, m, B, $R_1$ und $R_2$ die zuvor genannte Bedeutung haben, hergestellt werden.

Die Reaktion erfolgt vorteilhafterweise in einer Lösung, die aus wässrigem Alkalisalz und aus einem wasserlöslichen Aether, wie z.B. Tetrahydrofuran besteht und die Verbindung der Formel II enthält. Die Lösung sollte eine Temperatur niedriger als 20 °C haben. Die Reaktionszeit kann den Reaktionsbedingungen entsprechend variieren, beträgt jedoch vorteilhafterweise 1 bis 12 Stunden.

Die Verbindungen der Formel II können nach der Methode beschrieben von Kozlev et al., J. Gen. Chem. Russ 1947, 17, 289, hergestellt werden.

Die Verbindungen der Formel I, worin A —$CH_2$— ist, können ferner aus den entsprechenden Anthrachinonsulfonamiden der Formel IV

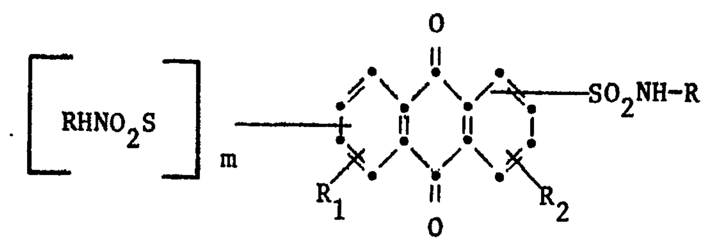

(IV)

und aus einer Verbindung der Formel V

HO — $CH_2$ — B (V),

worin m, B, R, $R_1$ und $R_2$ die zuvor genannte Bedeutung haben, hergestellt werden.

Vorteilhafterweise gibt man die Verbindung der Formel IV in eine wässrige Lösung der Formel V und erwärmt bis zu 100 °C. Die Reaktionszeit kann je nach Reaktionsbedingungen variieren, beträgt jedoch üblicherweise 1 bis 12 Stunden. Die Reaktionstemperatur ist vorzugsweise 60-80 °C.

Die Verbindungen der Formel V, worin B —$SO_3Na$ ist, können auf einfache Weise aus Formaldehyd und Natriumbisulfit in wässriger Lösung bei 80 °C hergestellt werden. In diesem Fall entsteht die Verbindung der Formel I durch das Umsetzen der entstandenen Lösung mit der Verbindung der Formel IV.

Die Verbindung der Formel IV kann nach der Methode beschrieben von Tr. Leningr. Khim-Framatseut. Inst., 1960, 11, 48 hergestellt werden.

Bei der Verwendung der erfindungsgemässen Verbindungen der Formel I in dem Verfahren zur Entfernung von $H_2S$ als Verunreinigung aus Gasen und flüssigen Kohlenwasserstoffen kommen alkalische Lösungen, welche die Verbindungen der Formel I gelöst enthalten, zum Einsatz. Dabei wird das zu reinigende Gas oder Gasgemisch mit der alkalischen Lösung gewaschen, und elementarer Schwefel fällt aus und wird entfernt. Das reduzierte Anthrachinonsulfonamid wird in Kontakt mit freiem Sauerstoff oder mit einem sauerstoffhaltigen Gas zurück oxidiert. Ein devartiges Verfahren ist ausführlich in der GB-PS 871 233 für Anthrachinondisulfonsäuren beschrieben.

Es werden insbesondere solche alkalischen Lösungen angewandt, welche neben der Verbindung der Formel I eine Verbindung mit einem mindestens zweiwertigen Metall, z.B. Vanadium enthalten. Die Lösung kann gegebenenfalls Chelat- oder Komplexbildner zur Zurückhaltung des Metalls in der Lösung enthalten. Die Komplexbildner sind Verbindungen, die mindestens einen Phosphonsäurerest enthalten.

Die Vanadium-Verbindung ist vorzugsweise Alkalimetall- oder Ammoniumvanadat. Es kommen Ortho-, Meta-, oder Pyrovanadat in Frage. Beispiele für die Vanadium-Verbindung sind Natriumammonium-vanadat und Natriumorthovanadat.

Das Verhältnis der Verbindung der Formel I zu Vanadium beträgt vorteilhafterweise von 3: 1 bis 1: 2,

bevorzugt von 2 : 1 bis 1 : 1, besonders bevorzugt 2 : 1,5, vorausgesetzt, dass das Verhältnis von Vanadium zu $H_2S$ 2 : 1 ist.

Es ist vorteilhaft die Verbindungen der Formel I zur $H_2S$-Entfernung einzusetzen, da sie frei von Chlorid-Ionen sind und daher die Korrosion der Apparatur vermieden wird. Die Verbindungen der Formel I sollten daher aus den entsprechenden Anthrachinonsulfonamiden der Formel IV, wie beschrieben, anstelle von Anthrachinonsulfonylchloriden hergestellt werden.

Besonders vorteilhaft ist die Verwendung von Gemischen bestehend aus 2,6- und 2,7-Disulfonamiden der Formel I, da sie eine erhöhte Löslichkeit zeigen gegenüber den Gemischen der entsprechenden Disulfonsäuren. Die gute Löslichkeit erlaubt den Gesamteinsatz des Gemisches als Katalysator zur Entfernung von $H_2S$ aus Gasen, während die 2,7-Disulfonsäure zuerst von der schlechten löslichen 2,6-Disulfonsäure abgetrennt werden muss.

Die folgenden Beispiele erläutern die Erfindung. Teile sind Gewichtsteile, Prozente sind Gewichtsprozente.

## Beispiel 1

76,9 Teile Natrium-hydroxymethylsulfonat und 22,9 Teile Natriumhydroxid in 300 Teilen Wasser gibt man in einen Dreihalskolben, welcher mit Rührer, Thermometer und Rückflusskühler versehen ist. Diese Lösung wird auf 70 °C erwärmt und mit 105 Teilen eines 1: 1-Gemisches bestehend aus Anthrachinon-2,6- bzw. -2,7-disulphonamid versetzt und anschliessend 3 Stunden auf 70 °C gehalten. Nach Verdampfen des Lösungsmittels erhält man 171,4 Teile dunkelbraunes Natriumsalz von N,N'-bis-(sulfomethyl)anthrachinon-2,6- bzw. -2,7-disulfonamid mit einem Smp. > 300 °C.

| | | |
|---|---|---|
| Analyse : | C 25,9 % | Na 13,2 % |
| | H 2,2 % | Cl 0,1 % |
| | N 4,1 % | $SO_4^{-2}$ 16,9 % |
| | S 17,7 % | Wassergehalt 5,4 % |

## Beispiel 2

In einen Vierhalskolben, versehen mit Rührer, Thermometer, Rückflusskühler und pH-Elektrode gibt man 4,4 Teile Aminomethansulfonsäure und 1,6 Teile Natriumhydroxid in 50 Teilen Wasser und 150 Teilen Tetrahydrofuran. Man fügt 8 Teile Anthrachinon-2,6-disulfonylchlorid portionenweise zu und reguliert die pH währenddem auf 11,5 mit 8N Natronlauge. Die Lösungstemperatur ist weniger als 20 °C. Man verwendet Eis zum Kühlen. Nach Verdampfen des Lösungsmittels erhält man 14,2 Teile senffarbenes Natriumsalz von N,N'-bis(sulfomethyl)anthrachinon-2,6-disulfonamid. Smp. > 300 °C.

| | | |
|---|---|---|
| Analyse : | C 24,1 % | Na 15,8 % |
| | H 2,0 % | $Cl^-$ 8,0 % |
| | N 3,1 % | $SO_4^{-2}$ 12,7 % |
| | S 15,7 % | |

## Beispiel 3

10 Teile 2-Aminoäthylsulfonsäure und 3,2 Teile Natrium- hydroxid in 100 Teilen Wasser und 160 Teilen Tetrahydrofuran werden in einen Vierhalskolben, wie in Beispiel 2 beschrieben, gegeben. Man fügt 16 Teile Anthrachinon-2,6-disulfonylchlorid portionenweise hinzu und mit Hilfe von 8N Natronlauge hält man die pH bei 12,5 und die Temperatur unter 20 °C durch Kühlen mit Eis. Nach Verdampfen des Lösungsmittels erhält man 34,5 Teile braunes Natriumsalz von N,N'-bis-(sulfo-2-äthyl)anthrachinon-2,6-disulfonamid. Smp. > 300 °C.

| | | |
|---|---|---|
| Analyse : | C 30,9 % | Na 7,4 % |
| | H 2,6 % | $Cl^-$ 5,9 % |
| | N 3,1 % | $SO_4^{2-}$ 7,2 % |
| | S 16,7 % | |

## Beispiel 4

Man gibt 4,4 Teile Aminomethansulfonsäure und 1,6 Teile Natriumhydroxid in 250 Teilen Wasser in einen Vierhalskolben wie in Beispiel 2 beschrieben. Man fügt portionenweise 8 Teile eines 1: 1-Gemisches bestehend aus Anthrachinon-2,6- und -2,7-disulfonylchlorid zu. Die pH wird während 15 Stunden bzw. bis zum Beenden der Reaktion mit Hilfe von 8N Natronlauge bei 11,8 gehalten. Nach Verdampfen des Lösungsmittels erhält man braunes Natriumsalz von N,N'-bis(sulfomethyl)anthrachinon-2,6- und -2,7-disulfonamid. Smp. > 300 °C.

Analyse : C 21,8 % Na 19,8 %
H 1,7 % $Cl^-$ 10,2 %
N 2,4 % $SO_4^{2-}$ 21,2 %
S 13,9 %

Beispiel 5

6,2 Teile 2-Aminoäthylsulfonsäure und 2 Teile Natriumhydroxid in 50 Teilen Wasser und 34 Teilen Tetrahydrofuran werden in einen Vierhalskolben, wie in Beispiel 2 beschrieben, gegeben. Man fügt portionenwaise 10 Teile eines 1: 1-Gemisches bestehend aus Anthrachinon-2,6- und -2,7-disulfonylchlorid hinzu. Die pH wird mit 8N Natronlauge auf 13,1 gehalten und die Temperatur mit Hilfe von Eis unter 20 °C. Nach Verdampfen des Lösungsmittels erhält man braunschwarzes Natriumsalz von N,N'-bis(2-sulfoäthyl)anthrachinon-2,6- und -2,7-disulfonamid. Smp. > 300 °C.

Analyse : C 23,3 % Na 14,7 %
H 2,6 % $Cl^-$ 7,9 %
N 3,1 % $SO_4^{2-}$ 4,5 %
S 14,4 %

Beispiel 6

6 Teile Glyzin und 3,2 Teile Natriumhydroxid in 100 Teilen Wasser und 100 Teilen Tetrahydrofuran werden in einen Vierhalskoben, wie in Beispiel 2 beschrieben, gegeben. Man fügt portionenweise 16 Teile eines 1: 1-Gemisches bestehend aus Anthrachinon-2,6- und -2,7-disulfonylchlorid hinzu. Die pH wird mit 8N Natronlauge auf 12,3 gehalten und die Temperatur durch Kühlen mit Eis unter 20 °C. Nach Verdampfen des Lösungsmittels erhält man 28,7 Teile schwarzes Natriumsalz von N,N'-bis(carboxymethyl)anthrachinon-2,6- und -2,7-disulfonamid. Smp : ~ 250 °C.

Beispiel 7

4 Teile Natrium-hydroxymethylsulfonat und 1,2 Teile Natriumhydroxid werden in 20 Teilen Wasser mit 5,6 Teilen Anthrachinon-2,7-disulfonamid, wie in Beispiel 1 beschrieben, versetzt. Nach Verdampfen des Lösungsmittels erhält man 6,5 Teile dunkelbraunes Natriumsalz von N,N'-bis(sulfomethyl)-anthrachinon-2,7-disulfonamid. Smp. > 260 °C.

Analyse : C 16,3 % Na 14,4 %
H 2,3 % $Cl^-$ < 0,1 %
S 19,5 % $SO_4^{2-}$ 14,0 %

Beispiel 8

3,7 Teile Natrium-hydroxymethylsulfonat und 1,1 Teile Natronlauge in 20 Teilen Wasser werden mit 5 Teilen Anthrachinon-1,5-disulfonamid, wie in Beispiel 1 beschrieben, versetzt. Nach Verdampfen des Lösungsmittels erhält man 6,5 Teile schwarzes Natriumsalz von N,N'-bis(sulfomethyl)anthrachinon-1,5-disulfonamid. Smp. > 300 °C.

Analyse : C 20,2 % Na 15,5 %
H 2,1 % $Cl^-$ 0,9 %
N 3,7 % $SO_4^{2-}$ 16,9 %
S 18,2 % Wasser 8,2 %

Beispiel 9

6,1 Teile Natrium-hydroxymethylsulfonat und 1,8 Teile Natronlauge in 40 Teilen Wasser werden mit 8,4 Teilen eines Gemisches bestehend aus Anthrachinon-1,6- und -1,7-disulfonamid versetzt, wie in Beispiel 1 beschrieben. Nach Verdampfen des Lösungsmittels erhält man 15,1 Teile schwarzes Natriumsalz von N,N'-bis(sulfomethyl)anthrachinon-1,6- und -1,7-disulfonamid. Smp. > 300 °C.

Analyse : C 26,1 % Na 13,3 %
H 2,1 % $Cl^-$ 0,4 %
N 3,6 % $SO_4^{2-}$ 15,9 %
S 17,99 % Wasser 6,7 %

Wenn man in den Beispielen 1 und 7 bis 9 Kalium-hydroxymethylsulfonat, sowie in den Beispielen 2-6 Kaliumhydroxid verwendet, erhält man das entsprechende Kaliumsalz. Analogerweise kann Ammoniumhydroxymethylsulfonat bzw. Ammoniumhydroxid verwendet werden.

Beispiele 10-17

Anwendung von den Verbindungen der Formel I als Katalysator zum Entfernen von $H_2S$ aus Gasen. Die Testergebnisse zeigen die Ueberlegenheit der erfindungsgemässen Verbindungen gegenüber 2,7-Anthrachinondisulfonsäure.

Zur Durchführung des Testes wird eine gasabsorbierende Lösung der folgenden zusammensetzung hergestellt :

| | |
|---|---|
| 25 g/l $NaHCO_3$ | 8 g/l NaCNS |
| 5 g/l $Na_2CO_3$ | 3,8 g/l $NaVO_3$ |
| 10 g/l $Na_2S_2O_3$ | 2 g/l Katalysator |

Die pH beträgt 9,0-9,2. Der Versuch wird in einer Zelle durchgeführt, welche ein 1 l Gefäss mit Sauerstoffelektrode, Kalomelelektrode, Temperaturausgleichsonde, Luftzufuhr und eine lufthaltige Sinterscheibe enthält.

Der gelöste Sauerstoff-gehalt und das Redoxpotential wird gemessen.

1,5 l gasabsorbierende Lösung wird hergestellt und davon 1 l in die Zelle geführt. Die Lösung wird abwechselnd dreimal mit Sauerstoff behandelt und entlüftet indem zuerst Luft dann Stickstoff mit 500 ml/Minute durchgeblasen wird. Die Lösung ist am Schluss im entlüfteten Zustand.

In einem Minimum dieser Lösung wird 3,75 g $Na_2S$ aufgelöst und in die Zelle zurückgeführt. Wenn $H_2S$ in der alkalischen Absorptionslösung gelöst wird dissoziert zu $HS^-$. Einfachheitshalber schreibt man $HS^-$ beim Einsatz von $Na_2S$, da die dissozierte $S^{2-}$ Ionen aus $Na_2S$ bei der gegebenen pH zu $HS^-$ führen. Nach der Reduktion mit $Na_2S$ werden das Redoxpotential und der gelöste Sauerstoffgehalt für 10 Minuten stabilisiert während langsam einfliessender Stickstoff für Bewegung sorgt. Die Lösung wird anschliessend mit 500 ml/Min. durchfliessender Luft reoxidiert. Der gelöste Sauerstoffgehalt und das Redoxpotential wird kontinuierlich abgelesen. Die Oxydation wird so lange fortgesetzt, bis das Redoxpotential und die gelöste Sauerstoffkonzentration unverändert bleiben. Die Lösung wird dann mit Stickstoff, der eine Durchflussgeschwindigkeit von 500 ml/Min. hat, entlüftet und mit einer Zugabe von 3,75 g $Na_2S$ reduziert. Das beschriebene Vorgehen wird dreimal ausgeführt und der ausgefällte Schwefel nach jedem Vorgang abfiltriert.

Die Ergebnisse sind schematisch in Figur 1 dargestellt. Es werden die folgenden Parameter verwendet :

i) $t_{20\,\%}$ = die Zeit in der die Lösung eine 20 % Sättigung des gelösten Sauerstoffes erreicht.

ii) $t_{80\,\%}$ = die Zeit in der eine 80 % Sauerstoffsättigung erreicht ist.

iii) das Verhältnis $E_s/E_f$, worin $E_s$ das Redoxpotential des vollständig reduzierten Systems bedeutet und $E_f$ ein Redoxpotential im jeweiligen oxidierten Zustand ist. Einfachheitshalber wird $E_f$ als Redoxpotential bei $t_{80\,\%}$ genommen.

Die Ergebnisse die in Tafel 1 zusammengefasst sind, sind die Durchschnittswerte aus 3 Messungen. Es wurde 2,7-Anthrachinondisulfonsäure mit den Natriumsalzen der folgenden Verbindungen oder deren Gemische verglichen :

A. N,N'-Bis(sulfomethyl)anthrachinon-2,6- und -2,7-disulfonamid.
B. N,N'-Bis(sulfomethyl)anthrachinon-2,6-disulfonamid.
C. N,N'-Bis(sulfo-2-äthyl)anthrachinon-2,6-disulfonamid.
D. N,N'-Bis(sulfo-2-äthyl)anthrachinon-2,6- und -2,7-disulfonamid.
E. N,N'-Bis(carboxymethyl)anthrachinon-2,6- und -2, -disulfonamid.
F. N,N'-Bis(sulfomethyl)anthrachinon-2,7-disulfonamid.
G. N,N'-Bis(sulfomethyl)anthrachinon-1,5-disulfonamid.
H. N,N'-Bis(sulfomethyl)anthrachinon-1,6- und -1,7-disulfonamid.

(Siehe die Tafel 1 Seite 8).

Tafel 1

Vergleich der erfindungsgemässen Produkte mit 2,7-ADA (Anthrachinondisulfonsäure).

| Beispiel | Katalysator | Zeit der Sauerstoffsättigung | | Potential | | |
|---|---|---|---|---|---|---|
| | | $t_{20\%}$ Min. | $t_{80\%}$ Min. | Es mV | Ef mV | Verhältnis von Es/Ef |
| Vergleich | 2,7 – ADA | 9 | 16 | – 430 | – 196 | 2.2 |
| 10 | A | 9 | 18 | – 411 | – 175 | 2.4 |
| 11 | B | 7 | 10 | – 439 | – 180 | 2.4 |
| 12 | C | 14 | 22 | – 420 | – 175 | 2.4 |
| 13 | D | 7 | 24 | – 455 | – 157 | 2.9 |
| 14 | E | 4 | 8 | – 477 | – 188 | 2.5 |
| 15 | F | 8 | 15 | – 404 | – 161 | 2.5 |
| 16 | G | 7 | 9 | – 392 | – 86 | 4.5 |
| 17 | H | 7 | 9 | – 401 | – 148 | 2.7 |

Manche Reaktionen zum Binden des gasförmigen Sauerstoffes sind ionisch und verlaufen relativ schnell. Im allgemeinen bleibt der Sauerstoffgehalt der Lösung 5 %, so lange in der Lösung reduzierte ionische Verbindungen vorhanden sind. Darum kann man den Oxidationsgrad der Verbindungen durch Messen der Sauerstoffkonzentration bestimmen. Die Reoxidationszeit $t_{20\%}$ und $t_{80\%}$ gibt daher Aufschluss über die Reoxidationsrate des Systems in Gegenwart eines bestimmten Katalysators.

Der Prozess, wie alle Oxidationsprozesse, benötigt ein Redoxpaar. Der Oxidationsgrad der Lösung bestimmt das Redoxpotential, das sofort abgelesen werden kann.

Die Flüssigkeit besteht aus einem Gemisch von mindestens 3 Redoxpaaren. Das Einzelelektrodenpotential ist logarithmisch zu den Konzentrationen der oxidierten und reduzierten Formen in der Lösung bezogen.

$$\text{Potential} = \frac{\text{Standard}}{\text{Potential}} + \text{Konstant} \times \log_{10} \frac{(\text{Konzentration der oxid. Form})}{(\text{Konzentration der reduz. Form})}$$

Das Verhältnis $E_s/E_f$ ist ein Mass für den Reoxidationsgrad. Die Katalysatorwirkung ist an Hand der beiden Messungen (Zeit bis zur Sauerstoffsättigung und Redoxpotential) bestimmbar.

Die Ergebnisse des Zellenversuches können in 3 Typen eingeteilt werden :

a) solche mit grossem $t_{20\%}$, d.h. $\geqslant$ 30 Minuten aber auch grossem $E_s/E_f$-Verhältnis, d.h. $\geqslant$ 2,2.

b) solche mit mittlerem $t_{20\%}$, d.h. ~ 10 Minuten und grossem $E_s/E_f$-Verhältnis, d.h. $\geqslant$ 2,2.

c) solche mit kleinem $t_{20\%}$, d.h. 1-3 Minuten, aber mit kleinem $E_s/E_f$-Verhältnis, d.h. $<$ 2,0.

Das bedeutet : a) ist ein langsamer aber wirksamer Katalysator, b) ist ein wirksamer Katalysator und c) ist unwirksam.

Wenn die Sauerstoffsättigung der Lösung 20 % erreicht hat, hat der grösste Teile der Redoxreaktion stattgefunden. Da ausreichend gelöster Sauerstoff zur Verfügung steht, so ist die Zeit vom $t_{20\%}$ zum $t_{80\%}$ hauptsächlich eine Funktion der Katalysatorwirksamkeit. Je kleiner daher das Intervall zwischen $t_{20\%}$ und $t_{80\%}$ ist, umso leichter wird der Katalysator zurück oxidiert und je mehr das Verhältnis $E_s/E_f$ über 2,2 liegt, umso wirksamer ist der Katalysator.

Aus den Resultaten ist ersichtlich, dass alle Verbindungen A — H in die Kategorie b) fallen und deren Wirksamkeit mindestens so gut wenn nicht besser als die von 2,7-Anthrachinondisulfonsäure, ist.

**Ansprüche**

1. Verbindungen der Formel I

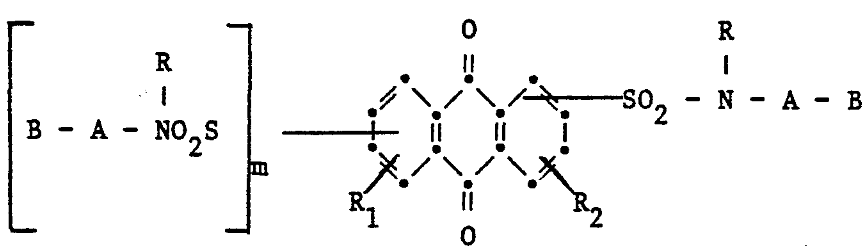

(I)

worin

A eine geradkettige oder verzweigte Alkylengruppe mit 1-4 C-Atomen ist,

B $-SO_3M$, $-CO_2M$, $-PO_3HM$ oder $-PO_3M_2$ bedeutet, wobei

M Wasserstoff oder ein wasserlöslich-machendes Kation ist,

R Wasserstoff, ein wasserlöslich-machendes Kation oder eine geradkettige oder verzweigte Alkylgruppe mit 1-4 C-Atomen bedeutet,

$R_1$ und $R_2$ gleich oder verschieden sind und für Wasserstoff, Methyl oder —COOH stehen, wobei mindestens eines von $R_1$ und $R_2$ Wasserstoff ist, und

m 0 oder 1 ist.

2. Verbindungen gemäss Anspruch 1, dadurch gekennzeichnet, dass in Formel I B die Gruppe $-SO_3M$, $R_1$ und $R_2$ Wasserstoff, M und R Wasserstoff, Alkalimetall oder ein Ammonium-Kation, in dem die H-Atome durch $C_1$-$C_6$-Alkyl oder $C_1$-$C_6$-Hydroxyalkyl substituiert sein können, darstellen, A ein geradkettiges $C_1$-$C_4$-Alkylen bedeutet und m 1 ist.

3. Verbindungen gemäss Anspruch 1, dadurch gekennzeichnet, dass A Methylen oder Aethylen ist, m die Zahl 1 bedeutet und M und/oder R Natrium, Kalium oder Ammonium bedeuten.

4. Eine Verbindung gemäss Anspruch 1, dadurch gekennzeichnet, dass sie N,N'-Bis(sulphomethyl)anthrachinon-2,6-disulphonamid ist.

5. Eine Verbindung gemäss Anspruch 1, dadurch gekennzeichnet, dass sie N,N'-Bis(sulphomethyl)anthrachinon-2,7-disulphonamid ist.

6. Ein Gemisch aus den Verbindungen gemäss Anspruch 4 und 5.

7. Eine Verbindung gemäss Anspruch 1, dadurch gekennzeichnet, dass sie N,N'-Bis(sulpho-2-äthyl)anthrachinon-2,6-disulphonamid ist.

8. Eine Verbindung gemäss Anspruch 1, dadurch gekennzeichnet, dass sie N,N'-Bis(sulpho-2-äthyl)anthrachinon-2,7-disulfonamid ist.

9. Ein Gemisch aus den Verbindungen gemäss Anspruch 7 und 8.

10. Verfahren zur Herstellung von Verbindungen der Formel I gemäss Anspruch 1, dadurch gekennzeichnet, dass man die entsprechenden Anthrachinonsulfonylhalogenide der Formel II

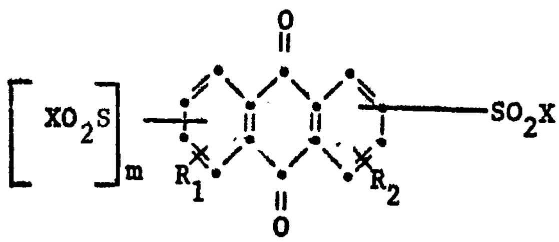

(II)

mit einer Verbindung der Formel III

$$R-NH-A-B \qquad (III)$$

worin X Halogen, R Wasserstoff oder geradkettiges oder verzweigtes $C_1$-$C_4$-Alkyl ist, und A, m, B, $R_1$ und $R_2$ die im Anspruch 1 angegebene Bedeutung haben, umsetzt.

11. Verfahren gemäss Anspruch 10, worin X Chlor ist.

12. Verfahren zur Herstellung von Verbindungen der Formel I gemäss Anspruch 1, worin A $-CH_2-$ ist, dadurch gekennzeichnet, dass man ein Anthrachinonsulphonamid der Formel IV

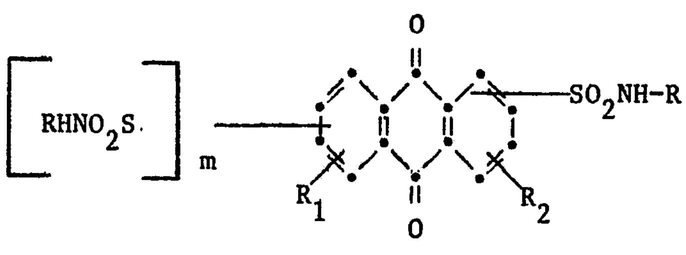

(IV)

mit einer Verbindung der Formel V

$$HO-CH_2-B \qquad (V)$$

worin m, B, R und $R_1$ und $R_2$ die im Anspruch 1 angegebene Bedeutung haben, umsetzt.

13. Verfahren gemäss Anspruch 12, worin die Verbindung der Formel V aus Formaldehyd und wässriger Bisulphitlösung bei 70 °C hergestellt worden ist.

**Claims**

1. A compound of the formula I

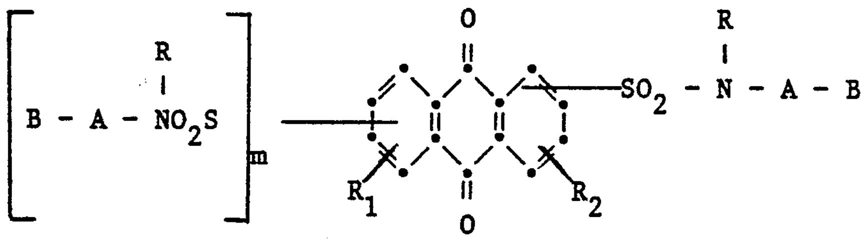

(I)

wherein

A is a straight-chain or branched-chain alkylene group having 1-4 C atoms,

B is $—SO_3M$, $—CO_2M$, $—PO_3HM$ or $—PO_3M_2$,

M is hydrogen or a water-solubilising cation,

R is hydrogen, a water-solubilising cation, or a straight-chain or branched-chain alkyl group having 1-4 C atoms,

$R_1$ and $R_2$ are identical or different, and are each hydrogen, methyl or —COOH, and

m is 0 or 1.

2. A compound according to Claim 1, where in formula I B is the group $—SO_3M$, $R_1$ and $R_2$ are each hydrogen, M and R are each hydrogen, an alkali metal or an ammonium cation in which the H atoms can be substituted by $C_1$-$C_6$-alkyl or $C_1$-$C_6$-hydroxyalkyl, A is a straight-chain $C_1$-$C_4$-alkylene group, and m is 1.

3. A compound according to Claim 1, wherein A is methylene or ethylene, m is the number 1, and M and/or R are sodium, potassium or ammonium.

4. A compound according to Claim 1, which compound is N,N'-bis(sulfomethyl)anthraquinone-2,6-disulfonamide.

5. A compound according to Claim 1, which compound is N,N'-bis(sulfomethyl)anthraquinone-2,7-disulfonamide.

6. A mixture of the compounds according to Claims 4 and 5.

7. A compound according to Claim 1, which compound is N,N'-bis(sulfo-2-ethyl)anthraquinone-2,6-disulfonamide.

8. A compound according to Claim 1, which compound is N,N'-bis(sulfo-2-ethyl)anthraquinone-2,7-disulfonamide.

9. A mixture of the compounds according to Claims 7 and 8.

10. A process for producing a compound of the formula I according to Claim 1, with process comprises reacting a corresponding anthraquinone sulfonyl halide of the formula II

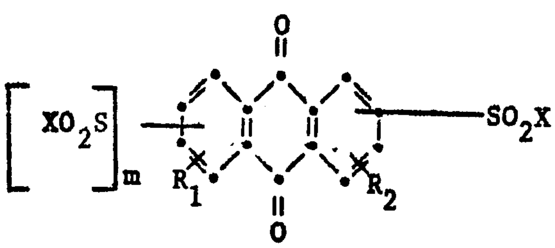

(II)

with a compound of the formula III

$$R—NH—A—B \qquad (III)$$

wherein X is halogen, R is hydrogen or straight-chain or branched-chain $C_1$-$C_4$-alkyl, and A, m, B, $R_1$ and $R_2$ have the meanings given in Claim 1.

11. A process according to Claim 10, wherein X is chlorine.

12. A process for producing a compound of the formula I according to Claim 1, wherein A is $—CH_2—$, with process comprises reacting and anthraquinone sulfonamide of the formula IV

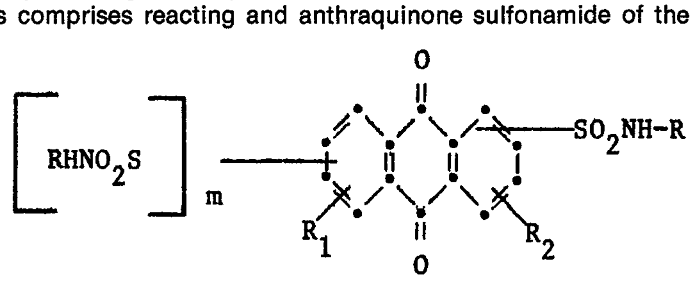

(IV)

with a compound of the formula V

$$HO-CH_2-B \qquad (V)$$

wherein m, B, R and $R_1$ and $R_2$ have the meanings given in Claim 1.

13. A process according to Claim 12, wherein the compound of the formula V is produced from formaldehyde and aqueous bisulfite solution at 70 °C, and reacted with the compound of the formula IV.

**Revendications**

1. Composés répondant à la formule I

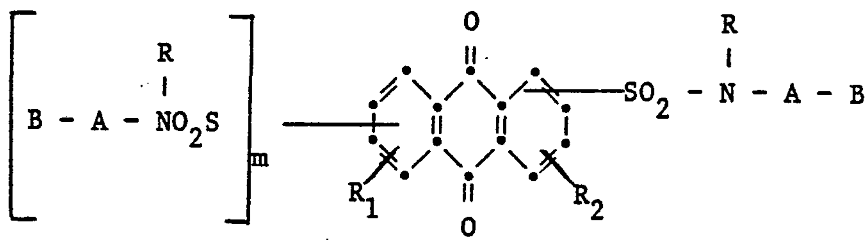

(I)

dans laquelle

A représente un radical alkylène, linéaire ou ramifié, contenant de 1 à 4 atomes de carbone,

B représente un groupe $-SO_3M$, $-CO_2M$, $-PO_3HM$ ou $-PO_3M_2$,

M le symbole désignant l'hydrogène ou un cation hydrosolubilisant,

R représente l'hydrogène, un cation hydrosolubilisant ou un radical alkyle, linéaire ou ramifié, contenant de 1 à 4 atomes de carbone,

$R_1$ et $R_2$ représentent chacun, indépendamment l'un de l'autre, l'hydrogène, un radical méthyle ou un groupe $-COOH$ et

m est égal à 0 ou à 1.

2. Composés selon la revendication 1, caractérisés en ce que, dans la formule I B représente un groupe $-SO_3M$, $R_1$ et $R_2$ représentent l'hydrogène, M et R représentent l'hydrogène, un cation de métal alcalin ou un cation d'ammonium dans lequel les atomes d'hydrogène peuvent être remplacés par des radicaux alkyles en $C_1$-$C_6$ ou des radicaux hydroxyalkyles en $C_1$-$C_6$, A représente un radical alkylène linéaire en $C_1$-$C_4$ et m est égal à 1.

3. Composés selon la revendication 1 dans lesquels A représente un radical méthylène ou éthylène, m représente le nombre 1 et M et/ou R représentent le sodium, le potassium ou l'ammonium.

4. Composé selon la revendication 1, en l'espèce le N,N'-bis-(sulfométhyl)-anthraquinone-disulfonamide-2,6.

5. Composé selon la revendication 1, en l'espèce le N,N'-bis-(sulfométhyl)-anthraquinone-disulfonamide-2,7.

6. Mélange des composés selon les revendications 4 et 5.

7. Composé selon la revendication 1, en l'espèce le N,N'-bis-(sulfo-2 éthyl)-anthraquinone-disulfonamide-2,6.

8. Composé selon la revendication 1, en l'espèce le N,N'-bis-(sulfo-2 éthyl)-anthraquinone-disulfonamide-2,7.

9. Mélange des composés selon les revendications 7 et 8.

10. Procédé de préparation de composés de formule I selon la revendication 1, caractérisé en ce qu'on fait réagir des halogénures d'anthraquinone-sulfonyles correspondants de formule II

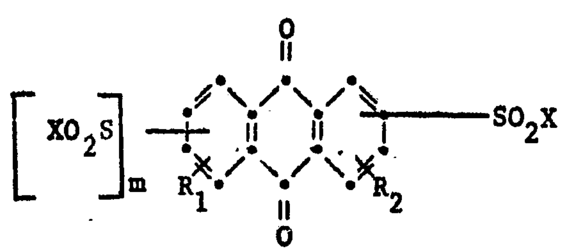

(II)

avec un composé de formule III

$$R-NH-A-B \qquad (III)$$

formules dans lesquelles X représente un halogène, R l'hydrogène ou un radical alkyle, linéaire ou ramifié, contenant de 1 à 4 atomes de carbone, et A, m, B, $R_1$ et $R_2$ ont les significations données à la revendication 1.

11. Procédé selon la revendication 10 dans lequel X est le chlore.

12. Procédé de préparation de composés de formule I selon la revendication 1 dans lesquels A représente $-CH_2-$, procédé caractérisé en ce qu'on fait réagir un anthraquinone-sulfonamide de formule IV

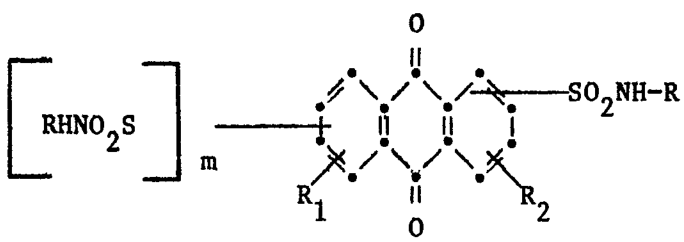

(IV)

avec un composé de formule V

$$HO-CH_2-B \qquad (V)$$

formules dans lesquelles m, B, R, $R_1$ et $R_2$ ont les significations données à la revendication 1.

13. Procédé selon la revendication 12 dans lequel on prépare le composé de formule V à partir du formaldéhyde et d'une solution aqueuse de bisulfite, à 70 °C, et on le fait réagir avec le composé de formule IV.

SCHEMATISCHE DARSTELLUNG DER TESTERGEBNISSE
IN DER STRETFORD-ZELLE

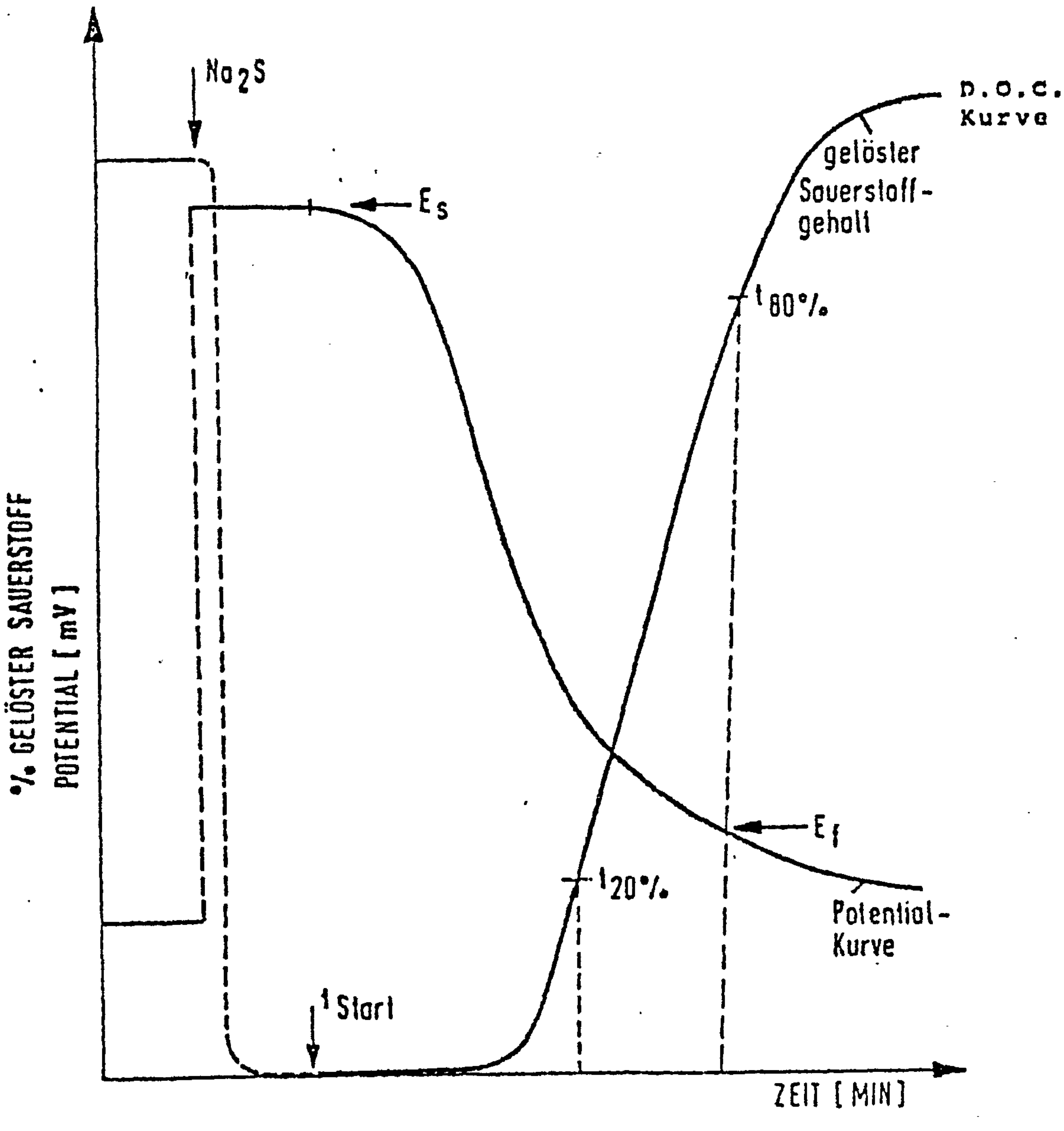


FIG.1